# EUROPEAN PATENT APPLICATION

(11) **EP 1 797 774 A1**
(43) Date of publication of application: **20.06.2007**
(21) Application number: 06025745.8
(22) Date of filing: 12.12.2006
(51) Int. Cl.: A23L 1/18

(54) **Corn prepared for cooking without the use of fat matter and process for producing said corn**

(30) Priority: 13.12.2005 AR P050105218
(71) Applicant: Arcusin, Carlos, Buenos Aires (AR)
(72) Inventor: Arcusin, Carlos, Buenos Aires (AR)
(74) Representative: Grünecker, Kinkeldey, Stockmair & Schwanhäusser Anwaltssozietät

(57) **Abstract**

This invention relates to the field of food as well as industrial processes for obtaining food. More particularly, this invention refers to corn prepared for cooking without the use of fat matter and having one or more sugars selected from a certain group, which allows it to be cooked - mainly in a microwave oven- in order to produce popcorn. The invention also refers to a process for the production of said corn.

## Description

### FIELD OF THE INVENTION

This invention relates to the feeding field as well as industrial processes for obtaining food

More particularly, this invention refers to corn prepared for cooking without the use of fat matter and having one or more sugars selected from a certain group, which allows it to be cooked - mainly in a microwave oven-without the use of fat matter.

The invention also refers to a process for the production of said corn.

### PRIOR ART

As it is known, popcorn is obtained by cooking until the bursting point of corn kernels of the so called popcorn.

The bursting ability of popcorn is due to the little amount of water or moisture contained in its core, said amount of water or moisture being surrounded by a starch environment, all of which are within the outer kernel's sheath.

As the kernel heats up, the water inside it expands thus creating an increasing pressure until the sheath gives way causing the kernel's body to burst. Popcorn is a special variety of corn called popcorn. Even though its cob looks like the cob of other corns, only the pop corn has said bursting property.

Although the food properties of corn are excellent, there is the problem that in order to achieve its burst and even improve its taste it must be cooked in fat matter.

In this regard, there is a very good explanation in a publication that may be found at the Internet address http://revista.consumer.es, wherein the following is pointed out:
"The popcorn is added fat matter so that their organoleptic properties are improved, specially its taste. This addition not only makes the product more caloric but also it has other consequences:
   It is well known that animal fats are unhealthy if consumed in excess due to their high content of saturated fat acids which are related with cardiovascular diseases, but they are less unhealthy than some vegetable fats (palm, palm kernel, coconut, colza) which are not healthy at all due to their high rate of saturated fats.
   In most cases, hydrogenated fats are used. Hydrogenation enables to solidify and convert into spreadable vegetable oils such as olive, sunflower and soy, which are liquid at room temperature. This physical-chemical process of introducing hydrogen molecules in the vegetable oil converts the oil unsaturated fats into saturated fats and it also forms new fat acids, the so called trans, which have a similar behavior in our organism and even more detrimental than saturated fats. The difference between "bad fat" and "good fat" originates in its ability to modify the blood cholesterol levels.
   On the other hand, the popcorn has a moisture content of 13.5 to 14.5% which is encapsulated within its core. When the kernel is cooked in a microwave oven, said cooking is made from inside outwards and therefore fat matter is added so that it acts over the outer cooking of the kernel.

### Advantages and Purposes:

A major advantage of this prepared kernel is that it may be burst without the use of fat matter or oils for its cooking due to the fact that each kernel itself contains the necessary substances for its expansion and, optionally, for a certain taste.

A purpose of this kernel with sheath consists in providing food particularly suitable for cooking by microwave ovens. Since the cooking is made from inside outwards, the stuck substance or dry sheath melts. In this way, the melted sugar covers the kernel thus preventing it from burning but enabling an appropriate cooking without fat matter and with a crispy consistency higher than the conventional kernel.

Likewise, it has the advantage that it may be cooked by means of other cooking conventional systems.

Another advantage is that since no fat matter is used, the obtained popcorn may be consumed avoiding health problems such as cholesterol, obesity, etc.

Another advantage is that this kernel has an increased preservation stability since it includes all the advantages of dry products.

Another advantage originated from its preservation ability is the reduction in price that may be achieved due to the minor requirements regarding its packaging.

### III. ILLUSTRATION

For better clarity and understanding reasons of the object of the invention, it is illustrated by means of several figures in which it has been represented in one of its preferred embodiments as an exemplary and not limitative way:

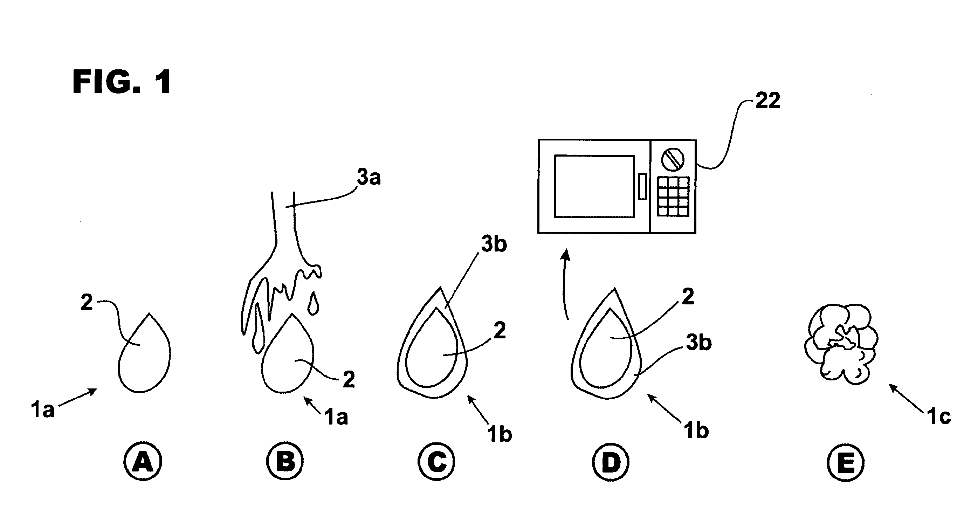

Figure 1 is a sequence illustrating the process to which the present kernel with sheath is subjected.

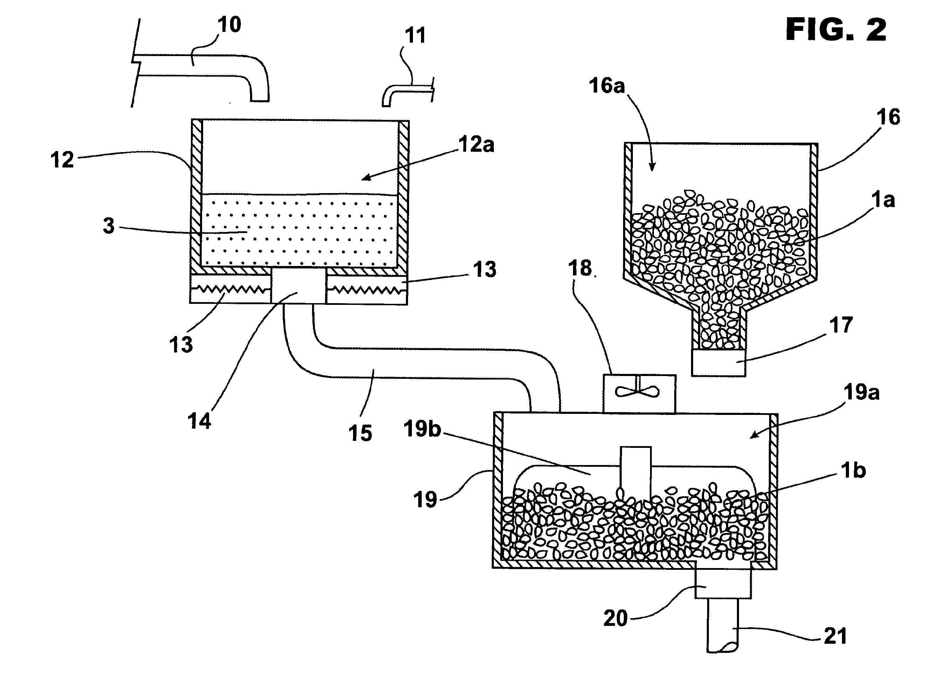

Figure 2 is a schematic representation of the industrial process, in one of its embodiments, for the obtainment of this kernel with sheath.
In the different figures, the same reference numbers indicate equal or corresponding parts and the sets of several elements have been indicated with letters.

### LIST OF THE MAIN REFERENCES

(1a) Corn kernel.
(1b) Prepared corn kernel
(1c) Popcorn
(2) Granular sheath
(3) Sugar [dextrose, glucose, fructose and/or sacarose]
(3a) Sugar flow
(3b) Stuck substance or dry sugar sheath (3)
(10) Sugar feeder duct
(11) Fluidification initiator
(12) Sugar fluidificator
(12a) Fluidification receptacle
(13) Heating means
(14) Flow sugar circulation control
(15) Flow sugar circulation duct
(16) Kernel feeder (1a)
(17) Unloading kernel control (1a)
(18) Drier
(19) Kernel and sugar Mixer Device
(19a) Mixer device
(19b) Mixer means
(20) Exit control of prepared kernels (1b)
(21) Exit duct
(22) Microwave oven

### IV. DESCRIPTION

This invention refers to a corn kernel prepared for cooking without fat matter for which it has stuck thereon a mainly dry substance (3b) which comprises a sugar (3) selected from a group comprising dextrose, fructose and/or sacarose. The invention also refers to a preparation process by means of which said sugar (3) is fluidized to be then stuck (3b) on the granular sheath (2) resulting in the prepared kernel (1b).

### DETAILED DESCRIPTION

More particularly, this corn kernel (3b) may be of the pop corn type or any other type which is suitable to obtain popcorn (1c).

The corn kernel (1a) has a granular body on which granular sheath (2) one or more sugars (3) are stuck (3b).

The sugar (3) shall be selected from the group comprising dextrose, glucose, fructose and sacarose. That is to say that at least one of said sugars (3) must be applied, which does not prevent other embodiments from being used in which more than one of said sugars (3) be applied, although said sugars must be any of the four ones comprised in the selection group. In a preferred embodiment, the sugar (3) may be dextrose.

The sugar (3) is placed stuck on the granular sheath (2) of the corn kernel (1a) so that the resulting product be a corn kernel (1b) for its cooking without fat matter.

The sugar (3) may partially or completely cover the granular sheath (2). In the second case, the sugar (3) will form a dry sheath (3b).

Furthermore, the stuck substance (3b) may comprise one or more flavoring agents, either natural or synthetic ones, such as sodium chloride.

### PROCESS:

In general terms, the preparation process of the kernel (1a) comprises a series of steps in which the fluidized sugar (3a) is mixed with the corn kernels (1a) until said sugar (3) remains either stuck on the granular sheath (2) in some areas or forming a dry sheath (3b).

In an embodiment, the process comprises a first step in which sugar (3) is fluidized (3a). It means that said sugar turns into a liquid (3a), semi-liquid, viscous, etc. state so that it may be handled for its adhesion (3b) onto the granular sheath (2). This step may be made in a fluidificator (12) in which fluidification receptacle (12a) said sugar (3) is added through a feeder duct (10). By means of a fluidification initiator (11), which may be a liquid suitable so said end, and heating means (13), said sugar (3) turns into a fluid state (3a).

By means of a circulation control (14) and duct /15(, the fluid sugar (3a) is subsequently carried to a kernel (1a) and sugar (3a) mixer device (19).

The corn kernels (1a) are provided by means of a kernel feeder (16) with an unloading control (17) which leads into said mixer device (19).

Within the mixer receptacle (19a), the mixing means (19b) move the kernel (1a) and the sugar (3) fluid (3a) until a dry sheath (3b) is formed and the prepared kernels (1b) are dispersed. As co-adjuvants of this operation, there may be drying means (18) that act by heating or venting or forced air circulation.

There is no doubt that when putting this invention into practice, modifications may be made with regard to the building and shape details without going beyond the main principles clearly stated in the following claims.

After having thus specially described and determined the nature of this invention and the way it may be taken into practice, the following is claimed as exclusive right and ownership:

## Claims

1. Corn kernel prepared for cooking without fat matter, which being of the pop corn type, is suitable for the obtainment of popcorn by means of cooking free of fat matter, comprising:
- a granular body, which when subjected to cooking, is susceptible of bursting for its conversion into popcorn;
**characterized in that**:
- it has a mainly dry substance stuck thereon containing at least one sugar selected from a sugar group consisting of dextrose, glucose, fructose and sacarose.

2. Corn kernel prepared for cooking without fat matter, according to claim 1, **characterized in that** it has a mainly dry substance stuck thereon mainly containing dextrose.

3. Corn kernel prepared for cooking without fat matter, according to claim 1, **characterized in that** the stuck substance forms an at least partial sheath of the granular body.

4. Corn kernel prepared for cooking without fat matter according to claim 1, **characterized in that** the stuck substance forms a complete sheath of the granular body.

5. Corn kernel prepared for cooking without fat matter, according to claim 1, **characterized in that** the stuck substance comprises, at least, a flavoring agent.

6. Corn kernel prepared for cooking without fat matter, according to claim 5, **characterized in that** the flavoring agent is an artificial flavoring agent.

7. Corn kernel prepared for cooking without fat matter, according to claim 5, **characterized in that** the flavoring agent is a natural flavoring agent.

8. Corn kernel prepared for cooking without fat matter, according to claim 5, **characterized in that** the flavoring agent is sodium chloride.

9. Corn kernel prepared for cooking without fat matter, according to claim 5, **characterized in that** the stuck substance comprises a plurality of flavoring agents.

10. Production process of corn kernels prepared for cooking without fat matter, **characterized in that** it comprises the following steps:
- From a fluidized sugar selected from the sugar group comprising dextrose, glucose, fructose and sacarose, mixing said fluidized sugar with corn kernels suitable for the obtainment of popcorn, so that said fluid, at least partially, covers said corn kernels, and
- Drying said fluid sugar until it dries and gets stuck on said kernels.

11. Process according to claim 10, **characterized in that** it comprises the following steps:
- fluidizing at least one sugar selected from the sugar group comprising dextrose, glucose, fructose and sacarose;
- mixing said fluidized sugar with corn kernels suitable for the obtainment of popcorn so that said fluid, at least partially, covers said corn kernels; and
- drying said fluid sugar until it dries and gets stuck on said kernels.

12. Process according to claim 10, **characterized in that** it comprises the following steps:
- fluidizing at least a sugar selected from the sugar group comprising dextrose, glucose, fructose and sacarose;
- mixing said fluidized sugar with corn kernels suitable for the obtainment of popcorn, so that said fluid, at least partially, covers said kernel corns;
- drying said fluid sugar until it dries and gets stuck on said kernels; and
- moving said kernels until dispersing them.

13. Process according to claim 10 **characterized in that** it comprises the following steps:
- fluidizing at least a sugar selected from the sugar group comprising dextrose, glucose, fructose and sacarose;
- mixing said fluidized sugar with corn kernels suitable for the obtainment of popcorn so that said fluid, at least partially, covers said corn kernels; and
- simultaneously subjecting to drying and movement until said fluid sugar becomes dry and stuck on said kernels and said kernels are dispersed.

14. Process according to claim 10, **characterized in that** it comprises the following steps:
- from a dry sugar, by selecting a sugar group comprising dextrose, glucose, fructose and sacarose, adding a fluidification liquid initiator and subjecting to heat until all the sugar that has been subjected converts into a fluid state;
- mixing said fluid sugar with corn kernels suitable for the obtainment of popcorn; and
- drying and dispersing the resulting kernels.

15. Process according to claim 10, **characterized in that** before the mixing step of the fluid sugar with the corn, at least a flavoring agent is added.

16. Process according to claim 10, **characterized in that** the fluidized sugar is a previously prepared syrup.
